# EUROPEAN PATENT APPLICATION

(11) **EP 4 513 640 A1**
(43) Date of publication of application: **26.02.2025**
(21) Application number: 24804403.4
(22) Date of filing: 17.06.2024
(51) Int. Cl.: H01M 50/15

(54) **TOP COVER ASSEMBLY AND BATTERY**

(30) Priority: 16.06.2023 CN 202321556456 U
(71) Applicant: Eve Power Co., Ltd., Jingmen, Hubei 448000 (CN)
(72) Inventor: LIN, Zhibing, Jingmen, Hubei 448000 (CN); SHU, Kuanjin, Jingmen, Hubei 448000 (CN); HE, Xiaowu, Jingmen, Hubei 448000 (CN); HUANG, Jinhai, Jingmen, Hubei 448000 (CN); WANG, Junmin, Jingmen, Hubei 448000 (CN); AN, Suli, Jingmen, Hubei 448000 (CN); WU, Xueyin, Jingmen, Hubei 448000 (CN); JIA, Yanli, Jingmen, Hubei 448000 (CN); ZHENG, Xu, Jingmen, Hubei 448000 (CN)
(74) Representative: Berggren Oy
(86) International application number: PCT/CN2024/099625
(87) International publication number: WO 2024/255908

(57) **Abstract**

The application provides a top cover assembly and a battery. The top cover assembly includes a cover plate and a sealing member. A first liquid injection hole is provided in the cover plate. A side of the cover plate away from the battery cell is provided with first insulating members. Each of the first insulating members is provided to separate the cover plate and a pole. A second liquid injection hole is provided in the first insulating member. The second liquid injection hole communicates with the first liquid injection hole. The sealing member is inserted in the second liquid injection hole and the first liquid injection hole.

## Description

This application claims priority to and the benefit of Chinese Patent Application No. 202321556456.7, filed on June 16, 2023, the disclosure of which is incorporated herein by reference in its entirety.

### TECHNICAL FIELD

The present disclosure relates to technical field of batteries, and more particularly, to a top cover assembly and a battery.

### BACKGROUND

A liquid injection hole is provided in the cover plate of the battery to inject the electrolyte into the housing of the battery. After completion of the liquid injection, the liquid injection hole is blocked with a sealing member to prevent liquid leakage. In the related art, at the time of design, the interior of the housing is reserved the space where the sealing member for the liquid injection hole is arranged, so as to prevent the sealing member at the liquid injection hole from squeezing the battery cell.

### SUMMARY

There is a problem in the related art that if the reserved size in the housing is too small, the size of the remaining space in the housing is small, the sealing member at the liquid injection hole is easily pressed to the battery cell. So, it occurs a problem that the liquid injection speed is slow, and the interference with the battery cell is large, which causes the safety of the battery to be reduced. If the reserved size is too large, the utilization rate of the space inside the housing is reduced, and the energy density of the battery is reduced.

In a first aspect, the present application provides a top cover assembly including a cover plate and a sealing member, in which a first liquid injection hole is provided in the cover plate, a side of the cover plate is provided with first insulating members, each of the first insulating members is provided to separate the cover plate and a pole, a second liquid injection hole is provided in the first insulating member, the second liquid injection hole communicates with the first liquid injection hole, and the sealing member is inserted in the second liquid injection hole and the first liquid injection hole.

In a second aspect, the present application also provides a battery including a housing and a battery cell disposed in a receiving cavity of the housing; and the top cover assembly, in which the top cover assembly blocks an opening of the receiving cavity.

### BENEFICIAL EFFECT

According to the cover plate assembly provided in the present application, by providing the second liquid injection hole on the first insulating member, the height of the second liquid injection hole may be increased, the height of the sealing member may be further increased, and the distance between the sealing member and the battery cell may be increased. On the one hand, interference between the sealing member and the battery cell may be avoided, and the safety performance of the battery may be improved. On the other hand, the space reserved for the sealing member in the housing may be reduced, and the utilization rate of the internal space of the housing of the battery may be increased, thereby increasing the energy density of the battery.

The battery provided in the present application has a high safety factor and a high energy density.

### BRIEF DESCRIPTION OF THE DRAWINGS

FIG. 1 is a schematic structural diagram of a top cover assembly according to some embodiments of the present application.
FIG. 2 is an exploded schematic view of the top cover assembly according to some embodiments of the present application.
FIG. 3 is a schematic cross-sectional view of the top cover assembly according to some embodiments of the present application.
FIG. 4 is a schematic diagram of a cover plate and a first insulating member according to some embodiments of the present application.
FIG. 5 is a schematic cross-sectional view of a cover plate and a first insulating member according to some embodiments of the present application.
FIG. 6 is a schematic diagram of a terminal board according to some embodiments of the present application.
FIG. 7 is another schematic cross-sectional view of the top cover assembly according to some embodiments of the present application.
FIG. 8 is another schematic diagram of a cover plate and a first insulating member according to some embodiments of the present application.
FIG. 9 is another schematic diagram of a terminal board according to some embodiments of the present application.
FIG. 10 is another schematic diagram of a cover plate according to some embodiments of the present application.

### Reference signs:

1, cover plate; 101, first mounting hole; 102, explosion-proof hole; 103, concave-convex structure; 104, first liquid injection hole; 2, first insulating member; 201, second mounting hole; 202, first boss; 203, second boss; 204, second liquid injection hole; 205, first mounting recess; 206, rib; 207, peripheral wall; 3, pole; 301, pole body; 302, terminal board; 3021, dodging structure; 3022, second mounting recess; 4, second insulating member; 401, third liquid injection hole; 5, connecting piece; 6, explosion-proof valve; 7, sealing member; 701, sealing column; 702, sealing cap; 7021, dodging groove; and 8, sealing ring.

### DETAILED DESCRIPTION

In the description of the present application, unless otherwise expressly specified and limited, the terms "conjoint", "connect", and "fix" are to be understood in a broad sense, for example, as a fixed connection, as a detachable connection, or as a one-piece connection; also as a mechanical connection or an electrical connection; or may be directly connected or indirectly connected by means of an intermediate medium; or may be internal communication of the two elements or interaction of the two elements. The specific meaning of the above terms in the present application may be understood by one of ordinary skill in the art as the case may be.

For the purposes of this application, unless otherwise expressly specified and limited, that the first feature is "over" or "under" the second feature may include the first feature is in direct contact with the second feature, or may include the first feature is not in direct contact with the second feature, but by means of a separate feature therebetween. Furthermore, that the first feature is "on", "above" and "over" the second feature includes the first feature is directly above and diagonally above the second feature, or simply indicating that the first feature is horizontally higher than the second feature. That the first feature is "below", "under", and "beneath" the second feature includes the first feature is directly below and diagonally below the second feature, or simply indicating that the first feature is horizontally lower than the second feature.

In the description of this embodiment, the terms "upper", "lower", "left", "right", "front", "behind" and other orientation or positional relationships are based on the orientation or positional relationship shown in the accompanying drawings, and are only for convenience of description and simplified operation. It is not intended to indicate or imply that the device or the element referred to must have a specific orientation, be constructed and operated in a specific orientation, and therefore should not be construed as a limitation on the present application. In addition, the terms "first" and "second" are only used for descriptive purposes and have no special meaning.

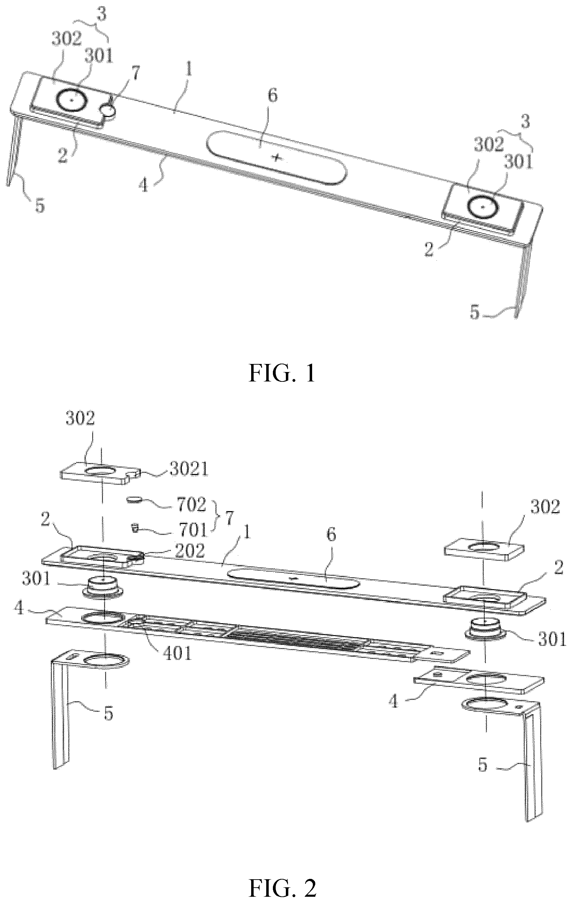

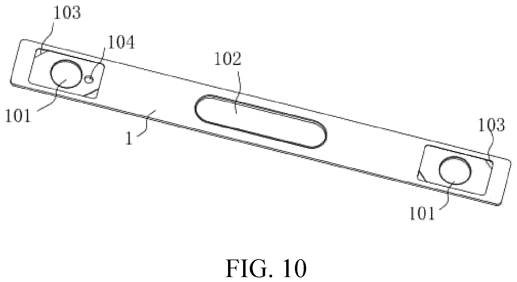

As shown in FIGS. 1 to 5 and 10, the present application provides a top cover assembly including a cover plate 1 and a sealing member 7. The cover plate 1 is provided with first liquid injection holes 104. A side of the cover plate 1 which is away from a battery cell is provided with first insulating members 2. The first insulating member 2 is provided to separate the cover plate 1 and a pole 3. The first insulating member 2 is provided with a second liquid injection hole 204. The second liquid injection hole 204 is in communication with a first liquid injection hole 104. The sealing member 7 is inserted into the second liquid injection hole 204 and the first liquid injection hole 104. By providing the second liquid injection hole 204 in the first insulating member 2, the height of the second liquid injection hole 204 may be elevated, and the height of the sealing member 7 may be elevated, and the distance between the sealing member 7 and the battery cell may be increased. On the one hand, the interference between the sealing member 7 and the battery cell may be avoided, and the safety performance of the battery may be improved. On the other hand, the space reserved for the sealing member 7 in the housing may be reduced, and the utilization rate of the space inside the housing of the battery may be improved, thereby improving the energy density of the battery.

In some embodiments, a side of the first insulating member 2 which is adjacent to the cover plate 1 is provided with a first boss 202. The first boss 202 is inserted into the first liquid injection hole 104. The first boss 202 is attached to the wall of the first liquid injection hole 104. The second liquid injection hole extends through the first boss 202. By providing the first boss 202 on the first insulating member 2, the first boss 202 may block the first liquid injection hole 104 to prevent the electrolyte from flowing out of a gap between the first liquid injection hole 104 and the first insulating member 2. By providing the second liquid injection hole 204 on the first boss 202, a length of the second liquid injection hole 204 may be prolonged, thereby increasing a contact area between the sealing member 7 and the wall of the second liquid injection hole 204, and improving the sealing effect. In the present embodiment, the sealing member 7 is snap-engaged with the second liquid injection hole 204, and the sealing member 7 is in interference fit with the second liquid injection hole 204. After the sealing member 7 is inserted into the second liquid injection hole 204, the first boss 202 is clamped between the sealing member 7 and the wall of the first liquid injection hole 104, thereby realizing the sealing effect.

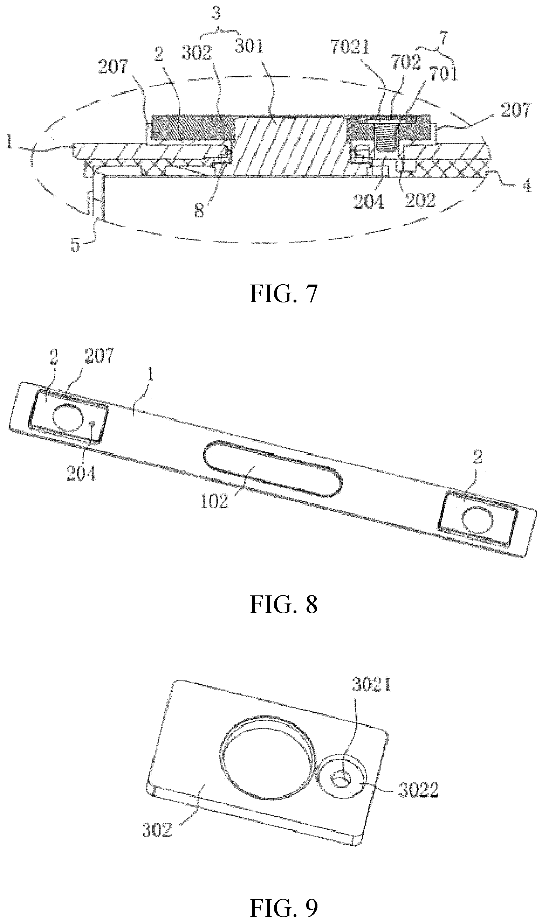

In some embodiments, the pole 3 includes a pole body 301 and a terminal board 302. The first insulating member 2 is provided between the terminal board 302 and the cover plate 1. The cover plate 1 is provided with the first mounting holes 101. The first insulating member 2 is provided with a second mounting hole 201. The pole body 301 is connected to the terminal board 302 through the first mounting hole 101 and the second mounting hole 201. The terminal board 302 is provided with a dodging structure 3021. By providing the dodging structure 3021 in the terminal board 302, a distance between the second liquid injection hole 204 and the second mounting hole 201 may be shortened, thereby reducing a size of the first insulating member 2, saving the material for the top cover assembly, and decreasing the costs. Referring to FIGS. 7 to 10, in one embodiment, the dodging structure 3021 is a dodging hole, and the dodging hole is spaced from an edge of the terminal board 302. Referring to FIGS. 1 to 6, the dodging structure 3021 is a dodging notch. By providing the dodging structure 3021 as the dodging notch, the distance between the second liquid injection hole 204 and the second mounting hole 201 may be reduced, the size of the first insulating member 2 may be reduced. The position and the type of the dodging structure 3021 may be selected according to actual design requirements of the battery.

Referring to FIGS. 1 to 6, in this embodiment, the dodging structure 3021 is the dodging notch, and a second boss 203 is provided on a side of the first insulating member 2 which is away from the cover plate 1. The second boss 203 is inserted into the dodging notch, and the second liquid injection hole 204 extends through the second boss 203. By providing the second boss 203, the height of the second liquid injection hole 204 may be elevated, thereby reducing the size of the sealing member 7 that extends into the receiving cavity of the housing, and reducing the space of the receiving cavity of the housing occupied by the sealing member 7.

Illustratively, a first mounting recess 205 is provided in the second boss 203. The second liquid injection hole 204 extends through a bottom of the first mounting recess 205. The sealing member 7 includes a sealing column 701 and a sealing cap 702. The sealing column 701 blocks the second liquid injection hole 204. The sealing cap 702 is inserted into the first mounting recess 205. The sealing cap 702 and the first insulating member 2 are ultrasonically welded. By providing the sealing column 701 and the sealing cap 702 that are split, after the sealing column 701 blocks the second liquid injection hole 204, the sealing cap 702 may form a secondary sealing, thereby improving the sealing effect of the sealing member 7 and avoiding the liquid leakage. By providing the first mounting recess 205, it is possible to provide an accommodating space for the sealing cap 702 to facilitate the connection between the sealing cap 702 and the first insulating member 2. In some embodiments, the sealing cap 702 is snap-engaged into the first mounting recess 205, and an interference fit may also be used between the sealing cap 702 and the first mounting recess 205. Both the sealing cap 702 and the first insulating member 2 are non-metallic parts. Since the sealing cap 702 and the first insulating member 2 are connected by the ultrasonic welding, the materials of both the sealing cap 702 and the first insulating member 2 are identical. The materials of both the sealing cap 702 and the first insulating member 2 are Phenylenesulfide (referred briefly to as PPS). The sealing column 701 is also a non-metallic part, and the material of the sealing column 701 may be PPS or other sealing material such as rubber.

In some embodiments, the sealing cap 702 does not protrude from an end face of the second boss 203. The sealing cap 702 does not protrude from the end face of the second boss 203, so that the sealing member 7 may be prevented from being higher than the original height of the top cover assembly, and the sealing member 7 may be prevented from affecting the electrical connection of the terminal board 302 to the external device.

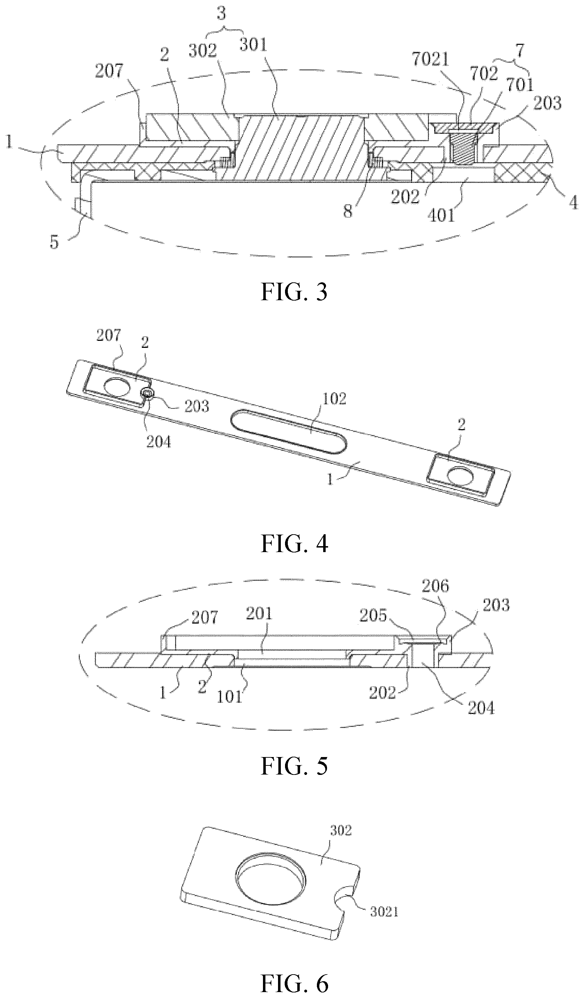

Referring to FIGS. 3 and 5, in some embodiments, the bottom of the first mounting recess 205 is provided with a rib 206 that abuts against a lower surface of the sealing cap 702. By providing the rib 206, when the welding of the sealing cap 702 and the first insulating member 2 is completed, the rib 206 is pressed against the sealing cap 702, thereby improving the sealing effect.

Illustratively, a peripheral portion of the first insulating member 2 is provided with a peripheral wall 207. The terminal board 302 is located in an annular region enclosed by the peripheral wall 207. The end face of the second boss 203 is flush with an end face of the peripheral wall 207. By arranging the end face of the second boss 203 to be flush with the end face of the surrounding wall 207, the processing difficulty of the first insulating member 2 may be reduced.

Referring to FIGS. 7 to 10, in this embodiment, the dodging structure 3021 is the dodging hole, and a second mounting recess 3022 is provided in a side of the terminal board 302 which is away from the cover plate 1. The dodging hole extends through the bottom of the second mounting recess 3022. The sealing member 7 includes the sealing column 701 and the sealing cap 702. The sealing column 701 blocks the dodging hole and the second liquid injection hole 204, and the sealing cap 702 is inserted into the second mounting recess 3022. The sealing cap 702 is laser welded to the terminal board 302. In this embodiment, the sealing cap 702 is made of the same material as the terminal board 302, both of which are metal pieces. In this embodiment, the first liquid injection hole 104 is adjacent to the pole 3 of the positive electrode of the battery. Therefore, the sealing cap 702 and the terminal board 302 are made of aluminum. In other embodiments, the sealing cap 702 is snap-engaged into the second mounting recess 3022, and the interference fit is used between the sealing cap 702 and the second mounting recess 3022. Of course, the sealing cap 702 should not be protruded from a surface of the terminal board 302, so as to avoid increasing the overall size of the battery.

Referring to FIGS. 3 and 7, a side of the sealing cap 702 which faces toward the sealing column 701 is provided with a dodging groove 7021. The dodging groove 7021 is positioned oppositely directly to the sealing column 701. When an end of the sealing column 701 protrudes from the bottom of the first mounting recess 205 in a case where the precision error occurs in the assembling, the end of the sealing column 701 may be inserted into the dodging groove 7021, so that the sealing column 701 is prevented from lifting up the sealing cap 702.

In some embodiments, the second insulating member 4 is provided on a side of the cover plate 1 which is close to the battery cell. The second insulating member 4 is used for separating the cover plate 1 from the battery cell. The second insulating member 4 is provided with a third liquid injection hole 401. The third liquid injection hole 401 is positioned oppositely directly to the second liquid injection hole 204. An end of the sealing member 7 is located in the third liquid injection hole 401. By providing the end of the sealing member 7 in the third liquid injection hole 401, it is possible to avoid the end of the sealing member 7 protruding from the second insulating member 4, thereby reducing the space of the receiving cavity occupied by the sealing member 7.

In some embodiments, the cover plate 1 and the first insulating member 2 are integrally formed. By providing the cover plate 1 and the first insulating member 2 integrally formed, on the one hand, the connection stability between the cover plate 1 and the first insulating member 2 may be improved, and on the other hand, the blocking effect of the first boss 202 on the first liquid injection hole 104 may be improved, so as to avoid the liquid leakage. The cover plate 1 is a metal piece, and the first insulating member 2 is a plastic piece. In manufacturing, the cover plate 1 after being molded may be placed in an injection mold, then the injection is performed in the mold, and thus the first insulating member 2 may be directly molded on the cover plate 1. During the injection molding, the mold core may be used in the mold to pre-reserve a position of the second liquid injection hole 204. The second liquid injection hole 204 has a pore size ranging from 2.0mm to 5mm. Illustratively, the pore size of the second liquid injection hole 204 may be 2.0mm, 2.5mm, 3.0mm, 3.5mm, 4.0mm, 4.5mm, and 5.0mm.

In some embodiments, an end face of the first boss 202 which is adjacent to the end of the battery cell is flush with a side face of the cover plate 1. Since the cover plate 1 and the first insulating member 2 are integrally formed by the injection molding, and the end face of the first boss 202 is provided to be flush with the side face of the cover plate 1, the molding difficulty of the cover plate 1 and the first insulating member 2 may be reduced.

In some embodiments, the cover plate 1 is provided with one or more concave-convex structures 103, so that the rotation of the first insulating member 2 may be prevented, and the connection stability of the cover plate 1 and the first insulating member 2 may be improved.

Illustratively, the top cover assembly further includes a connecting piece 5. The connecting piece 5 is soldered to the pole body 301 of the pole 3 and the tab of the battery cell, respectively, so as to realize the electrical conduction inside the battery.

In some embodiments, a sealing ring 8 is sandwiched between the pole body 301 of the pole 3 and the cover plate 1, thereby preventing the electrolyte from flowing out of the first mounting hole 101. The cover plate 1 is further provided with an explosion-proof hole 102. An explosion-proof valve 6 is provided at the explosion-proof hole 102.

The present embodiment also provides a battery including a housing, a battery cell, and a top cover assembly. The battery cell is disposed in a receiving cavity of the housing. The top cover assembly blocks an opening of the receiving cavity. Since the top cover assembly may elevate the height of the sealing member 7 and the sealing member 7 is prevented from being in contact with the battery cell, the battery including the top cover assembly has the high safety. Since the space of the receiving cavity occupied by the sealing member 7 is small, the utilization rate of the space of the receiving cavity may be improved, and the energy density of the battery may be improved.

## Claims

1. A top cover assembly comprising a cover plate (1) and a sealing member (7), wherein a first liquid injection hole (104) is provided in the cover plate (1), a side of the cover plate (1) is provided with first insulating members (2), each of the first insulating members (2) is provided to separate the cover plate (1) and a pole (3), a second liquid injection hole (204) is provided in the first insulating member (2), the second liquid injection hole (204) communicates with the first liquid injection hole (104), and the sealing member (7) is inserted in the second liquid injection hole (204) and the first liquid injection hole (104).

2. The top cover assembly according to claim 1, wherein a side of the first insulating member (2) adjacent to the cover plate (1) is provided with a first boss (202), the first boss (202) is inserted into the first liquid injection hole (104), the first boss (202) is attached to a wall of the first liquid injection hole (104), and the second liquid injection hole (204) extends through the first boss (202).

3. The top cover assembly according to claim 2, wherein the sealing member (7) is snap-engaged into the second liquid injection hole (204).

4. The top cover assembly according to claim 2, wherein the sealing member (7) is welded to the first insulating member (2).

5. The top cover assembly according to claim 1, wherein the pole (3) comprises a pole body (301) and a terminal board (302), the cover plate (1) is provided with first mounting holes (101), the pole body (301) extends through a corresponding one of the first mounting holes (101) to connect with the terminal board (302), the first insulating member (2) is provided between the terminal board (302) and the cover plate (1), the terminal board (302) is provided with a dodging structure (3021), the dodging structure (3021) is a dodging hole, and the dodging hole communicates with the second liquid injection hole (204).

6. The top cover assembly according to claim 1, wherein the pole (3) comprises a pole body (301) and a terminal board (302), the cover plate (1) is provided with first mounting holes (101), the pole body (301) extends through a corresponding one of the first mounting holes (101) to connect with the terminal board (302), the first insulating member (2) is provided between the terminal board (302) and the cover plate (1), the terminal board (302) is provided with a dodging structure (3021), the dodging structure (3021) is a dodging notch, and the dodging notch communicates with the second liquid injection hole (204).

7. The top cover assembly according to claim 5 or 6, wherein a side of the first insulating member (2) away from the cover plate (1) is provided with a second boss (203), the second boss (203) is inserted into the dodging structure (3021), and the second liquid injection hole (204) extends through the second boss (203).

8. The top cover assembly according to claim 7, wherein the second boss (203) is provided with a first mounting recess (205), the second liquid injection hole (204) extends through a bottom of the first mounting recess (205), and the sealing member (7) comprises a sealing column (701) and a sealing cap (702), the sealing column (701) blocks the second liquid injection hole (204), and the sealing cap (702) is inserted into the first mounting recess (205).

9. The top cover assembly according to claim 8, wherein the sealing cap (702) is ultrasonically welded to the first insulating member (2); or,
the sealing cap (702) is snap-engaged into the first mounting recess (205) in the first insulating member (2).

10. The top cover assembly according to claim 9, wherein a material of the sealing cap (702) comprises Phenylenesulfide; and/or,
a material of the first insulating member (2) comprises the Phenylenesulfide; and/or,
a material of the sealing column (701) comprises the Phenylenesulfide or rubber.

11. The top cover assembly according to claim 8, wherein an outer end face of the sealing cap (702) does not protrude from an outer end face of the second boss (203).

12. The top cover assembly according to claim 8, wherein the bottom of the first mounting recess (205) is provided with a rib (206) which abuts a lower surface of the sealing cap (702).

13. The top cover assembly according to claim 5 or 6, wherein a second mounting recess (3022) is provided on a side of the terminal board (302) away from the cover plate (1), the dodging hole extends through a bottom of the second mounting recess (3022), the sealing member (7) comprises a sealing column (701) and a sealing cap (702), the sealing column (701) blocks the dodging hole and the second liquid injection hole (204), and the sealing cap (702) is inserted into the second mounting recess (3022).

14. The top cover assembly according to claim 13, wherein the sealing cap (702) is welded to the terminal board (302); or,
the sealing cap (702) is snap-engaged with the second mounting recess (3022) in the terminal board (302).

15. The top cover assembly according to claim 14, wherein a material of the sealing cap (702) comprises aluminum; and/or,
a material of the terminal board (302) comprises the aluminum.

16. The top cover assembly according to any one of claims 1 to 6, further comprising a second insulating member (4) provided on a side of the cover plate (1) adjacent to a battery cell, wherein the second insulating member (4) is provided with a third liquid injection hole (401), and an end of the sealing member (7) is located in the third liquid injection hole (401).

17. A battery comprising:
a housing and a battery cell disposed in a receiving cavity of the housing; and
the top cover assembly according to any one of claims 1-16, wherein the top cover assembly blocks an opening of the receiving cavity.

18. The battery according to claim 17, further comprising a seal ring (8) disposed between the pole body (301) of the pole (3) and the cover plate (1).
